# EUROPEAN PATENT APPLICATION

(11) **EP 4 492 480 A1**
(43) Date of publication of application: **15.01.2025**
(21) Application number: 23217695.8
(22) Date of filing: 18.12.2023
(51) Int. Cl.: H01M 4/04, H01M 4/1391, H01M 4/1397, H01M 4/505

(54) **COMPOSITE CATHODE PREPARATION METHOD**

(30) Priority: 13.07.2023 TW 112126101; 18.10.2023 TW 112139798
(71) Applicant: Advanced Lithium Electrochemistry Co., Ltd., Taoyuan City 330 (TW)
(72) Inventor: Liu, Hao-Wen, 330 Taoyuan City (TW); Thi, Shiki, 330 Taoyuan City (TW); Hsieh, Han-Wei, 330 Taoyuan City (TW); Wu, Nae-Lih, 330 Taoyuan City (TW)
(74) Representative: 2K Patentanwälte Blasberg Kewitz & Reichel

(57) **Abstract**

A composite cathode preparation method is provided. The composite cathode preparation method includes steps of: (a) providing a cathode material, a solid electrolyte, a conductive carbon, and an alcohol solvent, wherein the cathode material includes a plurality of first particles and has a composition of Li[NiₐCo_{b}Mn_{c}Al_{d}]O₂, a+b+c+d=1, 0.8<a≤1, 0≤b<1, 0≤c<1, and 0≤d<1, wherein the solid electrolyte has a composition of Li₃InClₓF_{y}, x+y≤6, 0≤x≤6, and 0≤y≤3; (b) mixing the cathode material, the solid electrolyte, the conductive carbon, and the alcohol solvent to form a first slurry; (c) mixing the first slurry and a binder to form a second slurry; and (d) subjecting the second slurry to a heat treatment and remove the alcohol solvent to form the composite cathode, wherein the composite cathode includes a plurality of second particles, each of the second particles includes one of the plurality of first particles and the solid electrolyte coated on the first particles.

## Description

### FIELD OF THE INVENTION

The present disclosure relates to a battery cathode preparation method, and more particularly to a composite cathode preparation method for obtaining a solid electrolyte coating layer through an alcohol solvent thereby enhancing the electrochemical performance.

### BACKGROUND OF THE INVENTION

In recent years, the development of solid-state batteries has become a mainstream trend due to increasing emphasis on safety and energy density. While solid-state batteries show promise for improving upon traditional lithium batteries, there is still room for further enhancements. In terms of cathode materials, high-nickel cathode materials are known to be sensitive to moisture. As for solid electrolytes, it is a challenging task to reduce their thickness while improving their mechanical properties.

Among different types of solid-state electrolytes, oxide solid electrolytes, sulfide solid electrolytes, and halide solid electrolytes have emerged as the most promising options for mass production. Particularly, the halide solid electrolytes have received significant attention in recent years due to their remarkable properties such as high stability, safety, ion conductivity, and low interfacial impedance. However, similar to the high-nickel cathode materials, the halide solid electrolytes are also sensitive to moisture.

In traditional preparation methods, a composite cathode is formed by mixing and sintering the high-nickel cathode material and the halide solid electrolyte. Compared to dry mixing, wet mixing with water as a solvent has lower costs and can result in composite cathodes with high uniformity of solid. However, the moisture has an adverse effect on the halide solid electrolytes and the high-nickel cathode materials, thereby reducing the electrochemical performance of the composite cathode.

Therefore, there is a need to provide a composite cathode preparation method for obtaining a solid electrolyte coating layer through an alcohol solvent, thereby eliminating the adverse effects of moisture on the composite cathode and further enhancing the electrochemical performance thereof.

### SUMMARY OF THE INVENTION

An object of the present disclosure is to provide a composite cathode preparation method. The composite cathode preparation method includes steps as follows. Firstly, a cathode material, a solid electrolyte, and an alcohol solvent are mixed to form a slurry. After that, the slurry is heat treated to form the composite cathode. Compared to dry mixing, wet mixing is cost-effective, easy to control, and enhances the uniformity of solid in the composite cathode. Furthermore, the solid electrolyte dissolved in the alcohol solvent is uniformly mixed with the cathode material. This enables in-situ synthesis on the surface of positive electrode material particles during subsequent heat treatment, thereby forming composite cathode particles with uniform core-shell structure to enhance electrochemical performance. Wet mixing with the alcohol solvent also eliminates the adverse effects of moisture on the composite cathode, resulting in the composite cathode with minimal impurities. Before heat-treating, the slurry is disposed on a substrate and molded by roll pressing. The carrier includes an anti-adhesive membrane, which facilitates the detachment of the molded slurry. Alternatively, the slurry may be disposed between two carriers and molded by roll pressing. The two carriers include an anti-adhesive membrane and a current collector, allowing for the direct formation of a current collector integrated with the composite cathode after the heat treatment. The slurry is heat treated at a temperature ranged from 160°C to 200°C, and it ensures that the composite cathode preparation method is energy-efficient, cost-effective and environmentally friendly.

In accordance with an aspect of the present disclosure, a composite cathode preparation method is provided. The composite cathode preparation method including steps of: (a) providing a cathode material, a solid electrolyte, a conductive carbon, and an alcohol solvent, wherein the cathode material includes a plurality of first particles and has a composition of Li[NiₐCo_{b}Mn_{c}Al_{d}]O₂, wherein a+b+c+d=l, 0.8<a<_1, 0<b<l, 0<c<1, and 0<d<l, wherein the solid electrolyte has a composition of Li₃InClₓF_{y}, wherein x+y<6, 0≤x≤6, and 0<y<3; (b) mixing the cathode material, the solid electrolyte, the conductive carbon, and the alcohol solvent to form a first slurry; (c) mixing the first slurry and a binder to form a second slurry; and (d) heat-treating the second slurry and removing the alcohol solvent to form the composite cathode, wherein the composite cathode includes a plurality of second particles, each one of the plurality of second particles includes the solid electrolyte and one of the plurality of first particles, and the solid electrolyte is coated on the one of the plurality of first particles, wherein the conductive carbon and the binder are evenly distributed between the plurality of second particles.

In an embodiment, the first particle has a particle size ranged from 0.5 µm to 30 µm.

In an embodiment, the cathode material includes a single-crystalline cathode material.

In an embodiment, the coefficient "a" satisfies the condition of 0.85<a<l.

In an embodiment, the alcohol solvent includes an ethanol.

In an embodiment, the second slurry is molded before heat-treating.

In an embodiment, the second slurry is disposed on a first carrier and molded by roll pressing. The first carrier includes a current collector or an anti-adhesive material.

In an embodiment, the first carrier includes two first carriers, and the second slurry is disposed between the two first carriers and molded by roll pressing.

In an embodiment, the second slurry is heat treated on a second carrier, and the second carrier includes a glass or a metal.

In an embodiment, the second slurry is heat treated at a temperature ranged from 160°C to 200°C.

In an embodiment, the second slurry is heat treated for a period ranged from 10 minutes to 180 minutes.

In an embodiment, the second slurry is heat treated in a non-oxidizing atmosphere.

In an embodiment, the conductive carbon includes a carbon black, a carbon nanotube, or a carbon fiber.

In an embodiment, the binder includes a polytetrafluoroethene (PTFE).

### BRIEF DESCRIPTION OF THE DRAWINGS

FIG. 1 is a flow chart of a composite cathode preparation method according to an embodiment of the present disclosure;
FIG. 2A is a SEM image according to a first demonstrative example of the present disclosure;
FIG. 2B is a SEM image according to a first comparative example of the present disclosure;
FIG. 3A is a heat flow vs. temperature curve according to the first demonstrative example of the present disclosure;
FIG. 3B is a heat flow vs. temperature curve according to a second comparative example of the present disclosure;
FIG. 4A is an X-ray diffraction pattern according to the first demonstrative example of the present disclosure;
FIG. 4B is an X-ray diffraction pattern according to the second comparative example of the present disclosure;
FIG. 5A is a voltage vs. capacity curve according to the first demonstrative example of the present disclosure;
FIG. 5B is a voltage vs. capacity curve according to a second demonstrative example of the present disclosure;
FIG. 5C is a voltage vs. capacity curve according to a third demonstrative example of the present disclosure;
FIG. 5D is a voltage vs. capacity curve according to the first comparative example of the present disclosure;
FIG. 5E is a voltage vs. capacity curve according to the second comparative example of the present disclosure;
FIG. 6A is a capacity vs. cycle number curve according to the second demonstrative example of the present disclosure;
FIG. 6B is a capacity vs. cycle number curve according to the third demonstrative example of the present disclosure; and
FIG. 6C is a capacity vs. cycle number curve according to the first comparative example of the present disclosure.

### DETAILED DESCRIPTION OF THE PREFERRED EMBODIMENT

The present disclosure will now be described in greater detail with reference to the following embodiments. Please note that these descriptions of preferred embodiments are provided for the purpose of illustration and clarification only. They are not intended to be exhaustive or restricted to the precise forms presented. For example, the description of a first feature formed over or on a second feature in the following text may include embodiments in which the first and second features are in direct contact. It may also include embodiments in which additional features are formed between the first and second features, resulting in that the first and second features may not be in direct contact. While the terms "first," "second," "third," and similar terms used in the claims to describe various elements can be informative, these elements should not be restricted by such terms. In the descriptions of the respective embodiments, these terms are used to assign different reference numbers and are solely intended to distinguish one element from another. For example, a "first" element could be referred to as a "second" element, and vice versa, without deviating from the scope of the example embodiments. The terms such as "and," "or," and similar conjunctions used herein include any or all combinations of one or more of the associated listed items. Alternatively, the term "about" denotes a range within an acceptable standard error of the average recognized by one having ordinary skill in the art. In addition to the operational or working examples, unless otherwise explicitly stated, all numerical ranges, amounts, values, and percentages, including but not limited to those associated with materials, time duration, temperature, operating conditions, amount ratios, and the like, should be considered approximate and prefaced with the term "about." Hence, unless stated otherwise, numerical parameters in the present disclosure and the scope of the proposed patent are approximations that may vary within acceptable limits. Furthermore, significant digits for each numerical parameter should conform to conventional rounding techniques. A range may be expressed as spanning from one endpoint to another, or both endpoints may be included. Unless stated otherwise, all ranges disclosed herein are inclusive.

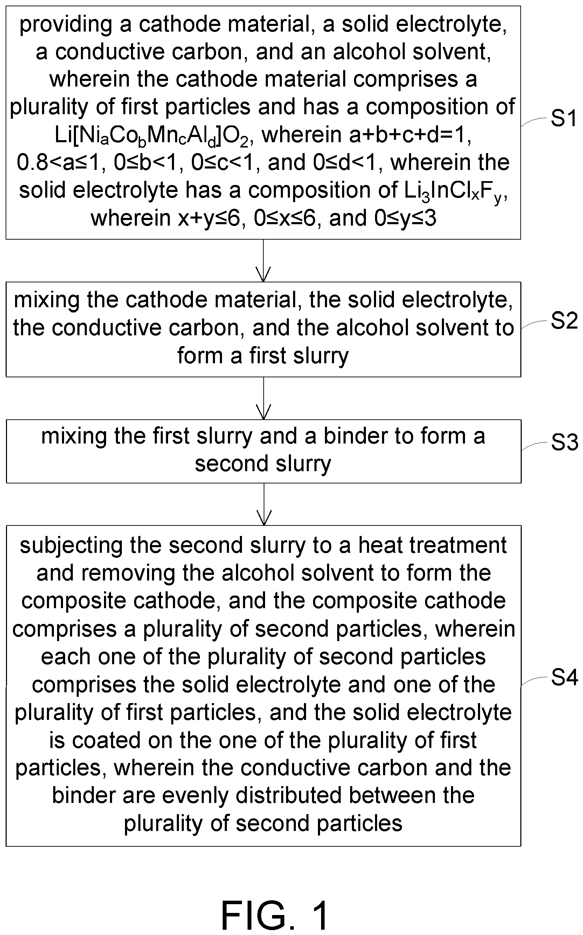

Please refer to FIG. 1. FIG. 1 is a flow chart of a composite cathode preparation method according to an embodiment of the present disclosure. In the embodiment, the composite cathode preparation method includes steps as follows. Firstly, as shown in the step S1, a cathode material, a solid electrolyte, a conductive carbon, and an alcohol solvent are provided. The cathode material includes a plurality of first particles. and has a composition of Li[NiₐCo_{b}Mn_{c}Al_{d}]O₂. The coefficients "a," "b," "c," and "d" satisfy the conditions of a+b+c+d=l, 0.8<a≤1, 0<b<l, 0<c<1, and 0<d<l. The solid electrolyte has a composition of Li₃InClₓF_{y}. The coefficients "x," "y," and "z" satisfy the conditions of x+y<6, 0≤x≤6, and 0<y<3. In the embodiment, preferably but not exclusively, the lithium metal oxide material includes a lithium nickel cobalt manganese oxide (NCM) material having a composition of Li[NiₐCo_{b}Mn_{c}]O₂. The coefficients "a," "b," and "c" satisfy the conditions of a=0.83, b=0.12, and c=0.05. These values indicate that nickel, cobalt and manganese in the NCM material have an amount ratio of 83:12:5. In another embodiment, the lithium metal oxide material includes a lithium nickel cobalt manganese aluminum oxide (NCMA) material having a composition of Li[NiₐCo_{b}Mn_{c}Al_{d}]O₂. The coefficients "a," "b," "c," and "d" satisfy the conditions of a=0.88, b=0.06, c=0.05, and c=0.01. In other embodiments, the lithium metal oxide material includes a NCM material or a NCMA material having different compositions, or a lithium nickel cobalt aluminum oxide (NCA) material having a composition of Li[NiₐCo_{b}Al_{d}]O₂. In some embodiments, the lithium metal oxide material includes a Lithium nickel oxide having a composition of LiNi02 for high voltage electrical applications. Certainly, the present disclosure is not limited thereto. In the embodiment, the cathode material includes a single-crystalline cathode material, and the first particles have a particle size ranged from 0.5 µm to 30 µm. The single-crystalline structure and small particle size contribute to the enhanced electrochemical performance of the composite cathode. Preferably but not exclusively, the cathode material is formed by a solid-state synthesis or a sol-gel process. It should be noted that the types, the particle size, the composition, and the preparation processes of the cathode material are not limited thereto, and not redundantly described herein. In the embodiment, the alcohol solvent is an ethanol, which is advantageous due to its non-toxic nature, widespread availability, and cost-effectiveness. The conductive carbon includes a nano carbon tube, a conductive graphite, a conductive carbon black, an acetylene black, or a vapor grown carbon fiber (VGCF). The present disclosure is not limited thereto.

Secondly, as shown in the step S2, the cathode material, the conductive carbon, and the alcohol solvent are mixed to form a first slurry. Compared to dry mixing, wet mixing is cost-effective, easy to control, and enhances the uniformity of solid. Furthermore, in-situ synthesis of the solid-state electrolyte occurs on the surface of the first particles of the cathode material, and it results in the formation of composite cathode particles with a uniform core-shell structure, thereby enhancing the electrochemical performance of the composite cathode. With the wet mixing with alcohol solvent, the adverse effects of moisture on the composite cathode are eliminated, and it results in the composite cathode with minimal impurities.

After that, as shown in the step S3, the first slurry and a binder are mixed to form a second slurry. In the embodiment, the first slurry and the binder are mixed in a non-oxidizing atmosphere to prevent oxidization. Preferably but not exclusively, the first slurry and the binder are heated from room temperature to between 70°C and 90°C during mixing, facilitating the evaporation of the alcohol solvent, forming a viscous second slurry. The viscous second slurry facilitates the subsequent preparation of the composite positive electrode. Preferably but not exclusively, in the embodiment, the binder is a polytetrafluoroethene (PTFE).

Finally, as shown in the step S4, the second slurry is heat-treated to form the composite cathode. The composite cathode includes a plurality of second particles. Each one of the second particles includes the solid electrolyte and one of the first particles, and the solid electrolyte is coated on the one of the plurality of first particles. Namely, the first particle is coated by the solid electrolyte to form the second particle. With the wet mixing and heat-treating, in-situ synthesis of the solid-state electrolyte occurs on the surface of the first particles of the cathode material, and it results in the formation of composite cathode particles with a uniform core-shell structure, thereby enhancing the electrochemical performance of the composite cathode. In the embodiment, the second slurry is molded before heat-treating. Preferably but not exclusively, the second slurry is disposed on a first carrier or between two first carriers, and then molded by roll pressing. The first carrier includes a current collector or an anti-adhesive material. In the embodiment, the second slurry is disposed between two PTFE membranes and subjected to roll pressing, making it easier to detach the molded slurry for the subsequent heat treatment. In another embodiment, the second slurry is disposed between an aluminum foil and a PTFE membrane and then subjected to roll pressing. The configuration results in a direct formation of a current collector with the composite cathode after the detachment and heat treatment. Preferably but not exclusively, the molded second slurry is heat treated on a second carrier. The second carrier includes a glass or a metal. The second slurry is heat treated at a temperature ranged from 160°C to 200°C and in a period ranged from 10 minutes to 180 minutes. Preferably, the second slurry is heat treated at a temperature ranged from 170°C to 190°C, for offering energy efficiency, cost-effectiveness, and environmental benefits. The second slurry is heat treated in a non-oxidizing atmosphere, such as an argon atmosphere or a nitrogen atmosphere.

The preparation method and the effects of the present disclosure are elaborated below through comparative examples and demonstrative examples.

### First demonstrative example

The first demonstrative example is a composite cathode a prepared as follows. Firstly, a cathode material, a solid electrolyte, a conductive carbon, and an alcohol solvent are provided. The cathode material is a polycrystalline cathode material having a composition of Li[Ni_{0.83}Co_{0.12}Mn_{0.05}]O₂. In other words, the cathode material of the first demonstrative example is a polycrystalline lithium nickel cobalt manganese oxide (NCM) material with nickel, cobalt, and manganese having an amount ratio of 83: 12:5. The solid electrolyte has a composition of Li₃InCl₆. The conductive carbon is a vapor grown carbon fiber (VGCF). The alcohol solvent is ethanol.

Secondly, the cathode material, the solid electrolyte, the conductive carbon, and the alcohol solvent are mixed and ground to form a first slurry. After that, the first slurry and a binder are mixed to form the second slurry. The binder is polytetrafluoroethene (PTFE). The first slurry and a binder are mixed is argon atmosphere. The first slurry and the binder are heated from room temperature (25°C) to between 70°C and 90°C during mixing, and it facilitates the evaporation of the alcohol solvent, forming a viscous second slurry.

Subsequently, the second slurry is evenly disposed between two PTFE membranes and then molded by roll pressing. Finally, the molded second slurry is detached from the PTFE membranes, and is heat-treated in flowing argon atmosphere to form the first demonstrative example. Preferably but not exclusively, the second slurry is heat treated at a temperature of 180°C and a duration of 120 minutes.

### Second demonstrative example

The preparation method of the second demonstrative example is generally similar to that of the first demonstrative example. However, in the second demonstrative example, the cathode material is a single-crystalline cathode material having a composition of Li[Ni_{0.83}Co_{0.12}Mn_{0.05}]O₂. In other words, the cathode material of the second demonstrative example is a single-crystalline lithium nickel cobalt manganese oxide (NCM) material with nickel, cobalt, and manganese having an amount ratio of 83:12:5.

### Third demonstrative example

The preparation method of the third demonstrative example is generally similar to that of the first demonstrative example. However, in the third demonstrative example, the cathode material is a polycrystalline cathode material having a composition of Li[Ni_{0.88}Co_{0.06}Mn_{0.06}]O₂. In other words, the cathode material of the third demonstrative example is a polycrystalline lithium nickel cobalt manganese oxide (NCM) material with nickel, cobalt, and manganese having an amount ratio of 88:6:6.

### First comparative example

The first comparative example is a composite cathode a prepared as follows. A cathode material, a solid electrolyte, a conductive carbon, and a binder are provided. The cathode material is a polycrystalline cathode material having a composition of Li[Ni_{0.83}Co_{0.12}Mn_{0.05}]O₂. In other words, the cathode material of the first comparative example is a polycrystalline lithium nickel cobalt manganese oxide (NCM) material with nickel, cobalt, and manganese having an amount ratio of 83:12:5. The solid electrolyte has a composition of Li₃InCl₆. The conductive carbon is a vapor grown carbon fiber (VGCF). The binder is polytetrafluoroethene (PTFE).

After that, the cathode material, the solid electrolyte, the conductive carbon, and the binder are mixed and then heat-treated to form the first comparative example.

### Second comparative example

The preparation method of the second comparative example is generally similar to that of the first demonstrative example. However, the solvent of the second comparative example is deionized water.

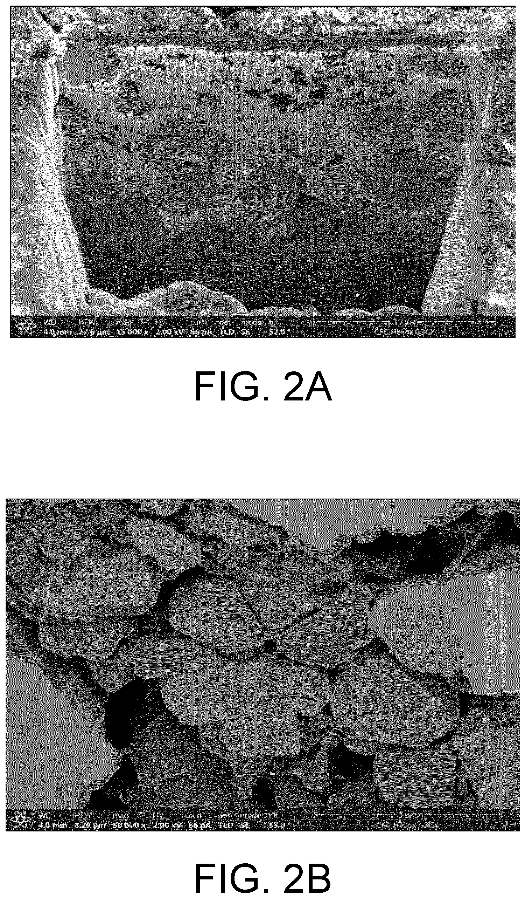

Please refer to FIGS. 2A and 2B. FIG. 2A is a SEM image according to first demonstrative example of the present disclosure. FIG. 2B is a SEM image according to first comparative example of the present disclosure. As shown in FIGS. 2A and 2B, the first demonstrative example, which is prepared by wet mixing, has higher uniformity of solid compared to the first comparative example, which is prepared by dry mixing. Specifically, the conductive carbon and the binder are evenly distributed between the second particles.

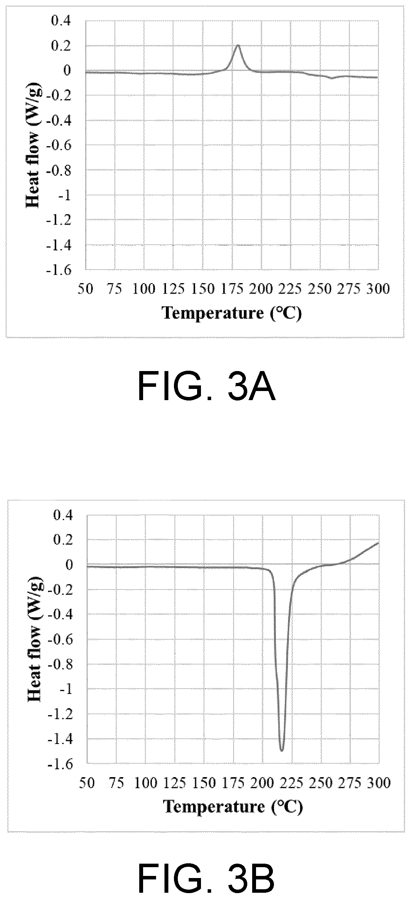

Please refer to FIGS. 3A and 3B. FIGS. 3A and 3B are heat flow vs. temperature curves according to the first demonstrative example and the second comparative example of the present disclosure, respectively. FIGS. 3A and 3B are obtained by using a differential scanning calorimetry (DSC) on the first demonstrative example and the second comparative example, respectively. As shown in the figures, a heat flow peak is observed at around 180°C in the first demonstrative example, which is prepared by wet mixing with the alcohol solvent. In comparison, a heat flow peak is observed at around 220°C in the second comparative example, which is prepared by wet mixing with the water. Namely, when a slurry is formed by wet mixing with the alcohol solvent, a composite cathode can be formed by subjecting the slurry to a lower-temperature heat treatment. Thereby, energy efficiency and cost-effectiveness are achieved. Furthermore, in FIG. 3A, the first demonstrative example has a peak temperature of 180°C and a peak width of 20°C. Therefore, a preferred temperature for the heat treatment of the present disclosure is ranged from 170°C to 190°C.

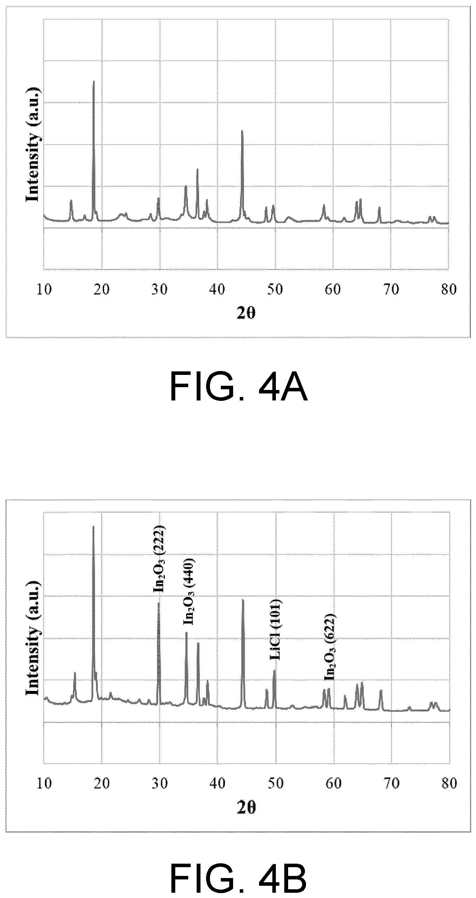

Please refer to FIGS. 4A and 4B. FIGS. 4A and 4B are X-ray diffraction patterns according to the first demonstrative example and the second comparative example of the present disclosure, respectively. FIGS. 4A and 4B are obtained by X-ray diffraction analysis of the first demonstrative example and the second comparative example for 60 minutes at 180°C, respectively. Comparing FIGS. 4A and 4B, (222)-plane, (440)-plane, and (622)-plane diffraction peaks of indium oxide (In₂O₃), and a (101)-plane diffraction peak of lithium chloride (LiCI) are observed in the X-ray diffraction pattern of the second comparative example. Namely, wet mixing with water results in the composite cathode with significant impurities of indium oxide (In₂O₃) and lithium chloride (LiCl). In comparison, wet mixing with alcohol solvent results in the composite cathode with minimal impurities.

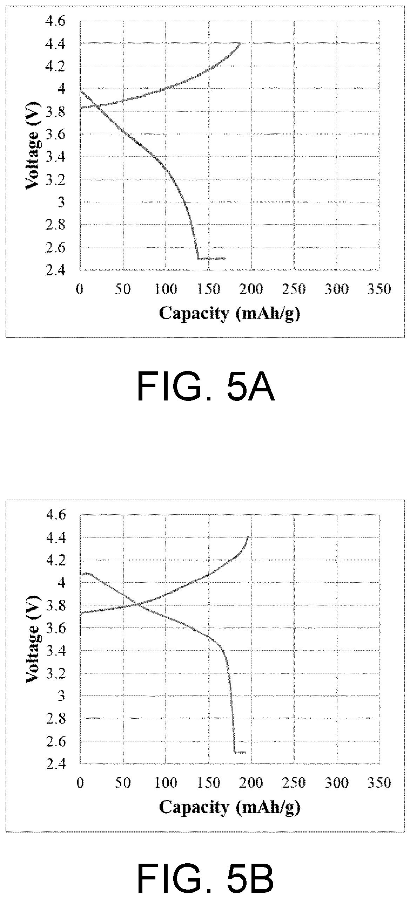

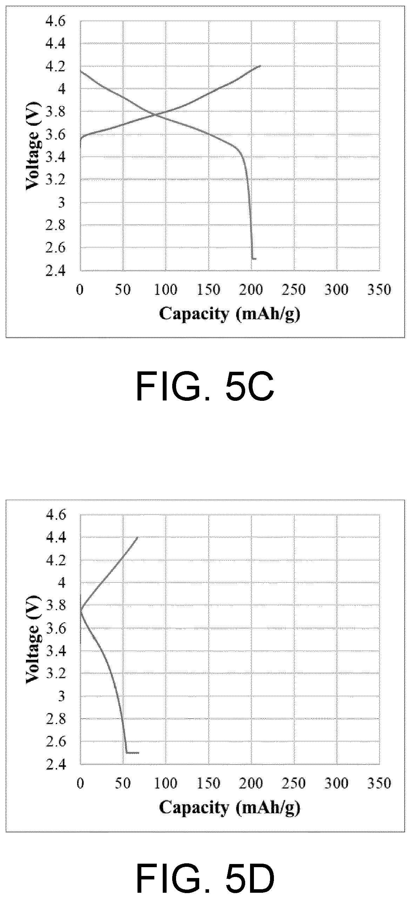

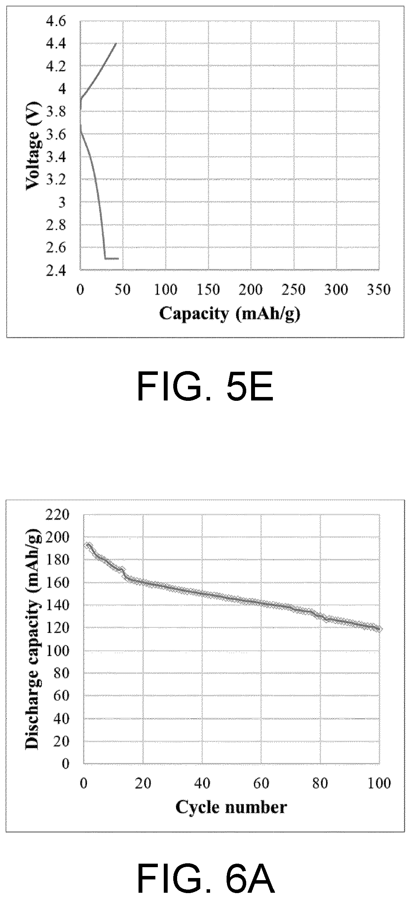

Please refer to FIGS. 5A to 5E. FIGS. 5A to 5C are the voltage vs. capacity curves obtained from testing button cells made of the first demonstrative example, the second demonstrative example, and the third demonstrative example of the present disclosure, respectively. FIGS. 5D and 5E are the voltage vs. capacity curves obtained from testing button cells made of the first comparative example and the second comparative example of, respectively. The cathode of each of the button cells is made of the composite cathodes of the first demonstrative example, the second demonstrative example, the third demonstrative example, the first comparative example, and the second comparative example, respectively. The anode of each of the button cells is made of lithium. The button cells undergo testing under specific conditions, including a voltage window ranging from 2.5 V to 4.4 V, a C-rate of 0.1 C, and a temperature of 55 °C. The button cells are charged by a constant current (CC) method and discharged by a constant current constant voltage (CCCV) method. During the constant current constant voltage (CCCV) discharging, the button cells are discharged at a constant current until they reach a specified voltage limit. Once the voltage limit is reached, the button cells are then discharged at a constant voltage until they are fully discharged. As shown in FIGS. 5A to 5E, the discharge capacity of the first demonstrative example is 176 mAh/g, the discharge capacity of the second demonstrative example is 193 mAh/g, the discharge capacity of the third demonstrative example is 204 mAh/g, the discharge capacity of the first comparative example is 67.9 mAh/g, and the second comparative example is 44.4 mAh/g. It can be concluded that the composite cathode formed by wet mixing with alcohol solvent has superior capacity performance compared to the composite cathode formed by wet mixing with water or by dry mixing. Furthermore, the second demonstrative example, which includes single-crystalline Li[Ni_{0.83}Co_{0.12}Mn_{0.05}]O₂, has greater capacity than the first demonstrative example, which includes polycrystalline Li[Ni_{0.83}Co_{0.12}Mn_{0.05}]O₂. Namely, the capacity performance of the composite cathode is further enhanced with the single-crystalline cathode material.

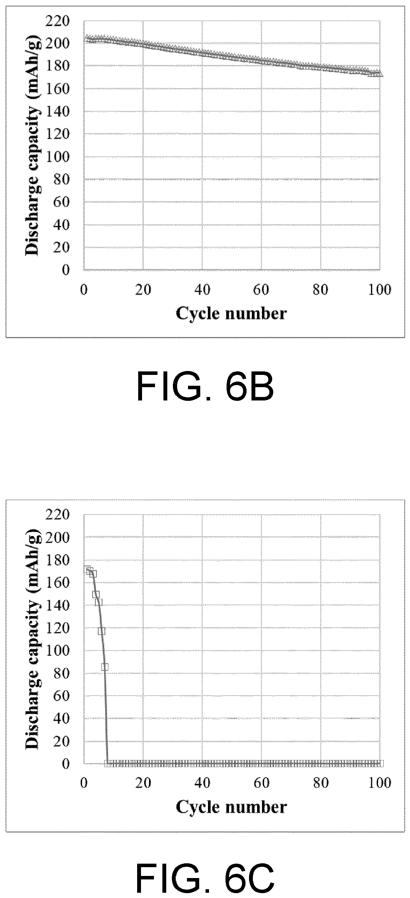

Please refer to FIGS. 6A to 6C. FIGS. 6A to 6C are the capacity vs. cycle number curves obtained from testing the button cells made of the second demonstrative example, the third demonstrative example, and the first comparative example, respectively. Table 1 below shows the discharge capacities at the first cycle and the hundredth cycle, and the capacity retention rates of the button cells. The cathode of each of the button cells is made of the composite cathodes of the second demonstrative example, the third demonstrative example, and the second comparative example, respectively. The anode of each of the button cells is made of lithium. As shown in FIGS. 6A to 6C and table 1, the discharge capacity of the second demonstrative example is 192 mAh/g at the first cycle and 118.8 mAh/g at the hundredth cycle, and the capacity retention rate is 61.9 %. The discharge capacity of the third demonstrative example is 204.9 mAh/g at the first cycle and 164.5 mAh/g at the hundredth cycle, and the capacity retention rate is 80.3 %. The discharge capacity of the second demonstrative example is 171.5 mAh/g at the first cycle, but rapidly decreases since the fourth cycle. At the eighth cycle, the discharge capacity of the second demonstrative example drops to lower than 0.2 mAh/g. It can be concluded that the composite cathode formed by wet mixing with alcohol solvent has superior initial capacity and cycle performance compared to the composite cathode formed by dry mixing. Furthermore, the third demonstrative example, which includes the cathode material having composition of Li[Ni_{0.88}Co_{0.06}Mn_{0.06}]O₂, has superior initial capacity and cycle performance than the second demonstrative example, which includes the cathode material having composition of Li[Ni_{0.83}Co_{0.12}Mn_{0.05}]O₂. Namely, the capacity and cycle performance of the composite cathode is further enhanced with the cathode material having composition of Li[NiₐCo_{b}Mn_{c}]O₂, wherein 0.85<a≤1.

**Table 1**

| | Discharge capacity at 1^{st} cycle | Discharge capacity at 100^{th} cycle | Capacity retention at 100^{th} cycle |
|---|---|---|---|
| Second demonstrative example | 192 mAh/g | 118.8 mAh/g | 61.9 % |
| Third demonstrative example | 204.9 mAh/g | 164.5 mAh/g | 80.3 % |
| First comparative example | 171.5 mAh/g | - | - |

### Fourth demonstrative example

The preparation method of the fourth comparative example is generally similar to that of the first demonstrative example. However, in the fourth demonstrative example, the solid electrolyte has a composition of Li₃InCl_{5.19}F_{0.81}.

### Fifth demonstrative example

The preparation method of the fifth comparative example is generally similar to that of the first demonstrative example. However, in the fourth demonstrative example, the solid electrolyte has a composition of Li₃InCl_{4.77}F_{1.23}.

### Sixth demonstrative example

The preparation method of the sixth comparative example is generally similar to that of the first demonstrative example. However, in the fourth demonstrative example, the solid electrolyte has a composition of Li₃InCl_{4.35}F_{1.65}.

Table 2 below shows the discharge capacities at the first cycle and the forty-fifth cycle for the button cells made of the first demonstrative example, the fourth demonstrative example, the fifth demonstrative example, and the sixth demonstrative example. The cathode of each of the button cells is made of the composite cathodes of the first demonstrative example, the fourth demonstrative example, the fifth demonstrative example, and the sixth demonstrative example, respectively. The anode of each of the button cells is made of lithium. The button cells undergo testing under specific conditions, including a voltage window ranging from 2.5 V to 4.4 V, a C-rate of 0.1 C, and a temperature of 55 °C. The button cells are charged by a constant current (CC) method and discharged by a constant current constant voltage (CCCV) method. During the constant current constant voltage (CCCV) discharging, the button cells are discharged at a constant current until they reach a specified voltage limit. Once the voltage limit is reached, the button cells are then discharged at a constant voltage until they are fully discharged. As shown in table 2, at the first cycle, the discharge capacity of the fifth demonstrative example is 196.18 mAh/g, slightly higher than the discharge capacity of the first demonstrative example. In the second demonstrative example, chlorine and fluorine has an amount ratio of 4.77:1.23. On the other hand, the discharge capacity of the fourth demonstrative example is 189.49 mAh/g, slightly lower than the discharge capacity of the first demonstrative example. However, the differences are not significant. In the fourth demonstrative example, chlorine and fluorine has an amount ratio of 5.19:0.81. At the forty fifth cycle, the discharge capacity of the fourth demonstrative example is 160.21 mAh/g, showing an improvement of 8.31% compared to that of the first demonstrative example, which is 147.91 mAh/g. The discharge capacity of the fifth demonstrative example is 166.90 mAh/g, and it shows an improvement of 12.83% compared to that of first demonstrative example. It can be concluded that the incorporation of chlorine and fluorine in the solid electrolyte results in the cathode material with high discharge capacity. Preferably, the solid electrolyte formulated with a chlorine-to-fluorine amount ratio ranged from 5.3:0.7 to 4.5:1.5 demonstrates superior performance.

**Table 2**

| | Discharge capacity at 1^{st} cycle | Discharge capacity at 45^{th} cycle |
|---|---|---|
| First demonstrative example | 192.97 mAh/g | 147.91 mAh/g |
| Fourth demonstrative example | 189.49 mAh/g | 160.21 mAh/g |
| Fifth demonstrative example | 196.18 mAh/g | 166.90 mAh/g |
| Sixth demonstrative example | 157.60 mAh/g | 123.62 mAh/g |

Table 3 below shows the capacity retention rates at the forty-fifth cycle for the button cells made of the first demonstrative example, the fourth demonstrative example, the fifth demonstrative example, and the sixth demonstrative example. As shown in table 3, at the forty-fifth cycle, the discharge capacity retention of the fourth demonstrative example is 84.55 %, showing an improvement of 10.31 % compared to that of the first demonstrative example, which is 76.65 %. The discharge capacity retention of the fifth demonstrative example is 85.07 %, showing an improvement of 10.98 % compared to that of the first demonstrative example. The discharge capacity retention of the fifth demonstrative example is 78.44 %, showing an improvement of 2.34 % compared to that of the first demonstrative example. It can be concluded that the incorporation of chlorine and fluorine in the solid electrolyte results in the cathode material with high discharge capacity retention. Preferably, the solid electrolyte formulated with a chlorine-to-fluorine amount ratio ranged from 5.3:0.7 to 4.5:1.5 demonstrates superior performance.

**Table 3**

| | Discharge capacity retention at 45^{th} cycle |
|---|---|
| First demonstrative example | 76.65 % |
| Fourth demonstrative example | 84.55 % |
| Fifth demonstrative example | 85.07 % |
| Sixth demonstrative example | 78.44 % |

In summary, the present disclosure provides a composite cathode preparation method. The composite cathode preparation method includes steps as follows. Firstly, a cathode material, a solid electrolyte, and an alcohol solvent are mixed to form a slurry. After that, the slurry is heat-treated to form the composite cathode. Compared to dry mixing, wet mixing is cost-effective, easy to control, and enhances the uniformity of solid in the composite cathode. Furthermore, the solid electrolyte dissolved in the alcohol solvent is uniformly mixed with the cathode material. This enables in-situ synthesis on the surface of positive electrode material particles during subsequent heat treatment, thereby forming composite cathode particles with uniform core-shell structure to enhance electrochemical performance. Wet mixing with the alcohol solvent also eliminates the adverse effects of moisture on the composite cathode, and it results in the composite cathode with minimal impurities. Before heat-treating, the slurry is applied to a substrate and molded by roll pressing. The carrier includes an anti-adhesive membrane, which facilitates the detachment of the molded slurry. Alternatively, the slurry may be applied between two carriers and molded by roll pressing. The two carriers include an anti-adhesive membrane and a current collector, allowing for the direct formation of a current collector integrated with the composite cathode after heat-treating. The slurry is heat treated at a temperature ranged from 160°C to 200°C, and it ensures that the composite cathode preparation method is energy-efficient, cost-effective and environmentally friendly.

## Claims

1. A composite cathode preparation method, **characterized by** comprising steps of:
(a) providing a cathode material, a solid electrolyte, a conductive carbon, and an alcohol solvent, wherein the cathode material comprises a plurality of first particles and has a composition of Li[NiₐCo_{b}Mn_{c}Al_{d}]O₂, wherein a+b+c+d=l, 0.8<a<_1, 0<b<l, 0<c<1, and 0<d<l, wherein the solid electrolyte has a composition of Li₃InClₓF_{y}, wherein x+y<6, 0≤x≤6, and 0<y<3;
(b) mixing the cathode material, the solid electrolyte, the conductive carbon, and the alcohol solvent to form a first slurry;
(c) mixing the first slurry and a binder to form a second slurry; and
(d) heat-treating the second slurry and removing the alcohol solvent to form the composite cathode, wherein the composite cathode comprises a plurality of second particles, each one of the plurality of second particles comprises the solid electrolyte and one of the plurality of first particles, and the solid electrolyte is coated on the one of the plurality of first particles, wherein the conductive carbon and the binder are evenly distributed between the plurality of second particles.

2. The composite cathode preparation method according to claim 1, wherein the first particle has a particle size ranged from 0.5 µm to 30 µm.

3. The composite cathode preparation method according to claim 1 or 2, wherein the cathode material comprises a single-crystalline cathode material.

4. The composite cathode preparation method according to any of the claims 1 to 3, wherein 0.85<a<_1.

5. The composite cathode preparation method according to any of the claims 1 to 4, wherein the alcohol solvent comprises an ethanol.

6. The composite cathode preparation method according to any of the claims 1 to 5, wherein the second slurry is molded before heat-treating.

7. The composite cathode preparation method according to claim 6, wherein the second slurry is applied on a first carrier and molded by roll pressing, wherein the first carrier comprises a current collector or an anti-adhesive material.

8. The composite cathode preparation method according to claim 7, wherein the first carrier comprises two first carriers, and the second slurry is disposed between the two first carriers and molded by roll pressing.

9. The composite cathode preparation method according to any of the claims 1 to 8, wherein the second slurry is heat treated on a second carrier, and the second carrier comprises a glass or a metal.

10. The composite cathode preparation method according to any of the claims 1 to 9, wherein the second slurry is heat treated at a temperature ranged from 160°C to 200°C.

11. The composite cathode preparation method according to any of the claims 1 to 10, wherein the second slurry is heat treated for a period ranged from 10 minutes to 180 minutes.

12. The composite cathode preparation method according to any of the claims 1 to 11, wherein the second slurry is heat treated in a non-oxidizing atmosphere.

13. The composite cathode preparation method according to any of the claims 1 to 12, wherein the conductive carbon comprises a carbon black, a carbon nanotube, or a carbon fiber.

14. The composite cathode preparation method according to any of the claims 1 to 13, wherein the binder comprises a polytetrafluoroethene (PTFE).

## Amended claims

### Amended claims in accordance with Rule 137(2) EPC.

1. A composite cathode preparation method, **characterized by** comprising steps of:
(a) providing a cathode material, a solid electrolyte, a conductive carbon, and an alcohol solvent, wherein the cathode material comprises a plurality of first particles and has a composition of Li[NiₐCo_{b}Mn_{c}Al_{d}]O₂, wherein a+b+c+d=1, 0.85<a≤1, 0≤b<1, 0≤c<1, and 0≤d<1, wherein the solid electrolyte has a composition of Li₃InClₓF_{y}, wherein x+y≤6, 0≤x≤6, and 0≤y≤3, wherein the cathode material comprises a single-crystalline cathode material, and the first particle has a particle size ranged from 0.5 µm to 30 µm;
(b) mixing the cathode material, the solid electrolyte, the conductive carbon, and the alcohol solvent to form a first slurry;
(c) mixing the first slurry and a binder to form a second slurry; and
(d) heat-treating the second slurry and removing the alcohol solvent to form the composite cathode, wherein the composite cathode comprises a plurality of second particles, each one of the plurality of second particles comprises the solid electrolyte and one of the plurality of first particles, and the solid electrolyte is coated on the one of the plurality of first particles, wherein the conductive carbon and the binder are evenly distributed between the plurality of second particles, wherein the second slurry is heat treated at a temperature ranging from 160°C to 200°C for a period of 10 to 180 minutes in a non-oxidizing atmosphere.

2. The composite cathode preparation method according to claim 1, wherein the alcohol solvent comprises an ethanol.

3. The composite cathode preparation method according to claim 1 or 2, wherein the second slurry is molded before heat-treating.

4. The composite cathode preparation method according to claim 3, wherein the second slurry is applied on a first carrier and molded by roll pressing, wherein the first carrier comprises a current collector or an anti-adhesive material.

5. The composite cathode preparation method according to claim 4, wherein the first carrier comprises two first carriers, and the second slurry is disposed between the two first carriers and molded by roll pressing.

6. The composite cathode preparation method according to any of the claims 1 to 5, wherein the second slurry is heat treated on a second carrier, and the second carrier comprises a glass or a metal.

7. The composite cathode preparation method according to any of the claims 1 to 6, wherein the conductive carbon comprises a carbon black, a carbon nanotube, or a carbon fiber.

8. The composite cathode preparation method according to any of the claims 1 to 7, wherein the binder comprises a polytetrafluoroethene (PTFE).
